# EUROPÄISCHE PATENTSCHRIFT

(11) **EP 0 661 309 B1**
(45) Veröffentlichungstag und Bekanntmachung des Hinweises auf die Patenterteilung: **25.11.1998**
(21) Anmeldenummer: 94119948.1
(22) Anmeldetag: 16.12.1994
(51) Int. Cl.: C08F 232/08, C08F 210/00, C09D 145/00, C08F 8/06

(54) **Verwendung von peroxogenierten Cycloolefincopolymeren**
Use of hydroperoxide derivatives of Cyclo-olefin copolymers
Utilisation de dérivés hydropéroxide de Copolymères de cyclooléfines

(30) Priorität: 24.12.1993 DE 4344512; 24.12.1993 DE 4344513
(43) Veröffentlichungstag der Anmeldung: 05.07.1995
(73) Patentinhaber: Ticona GmbH, 65451 Kelsterbach (DE)
(72) Erfinder: Kreuder, Willi, Dr., D-55126 Mainz (DE)

(56) Entgegenhaltungen:
- EP-A- 0 002 760
- US-A- 2 911 391
- US-A- 3 458 597
- US-A- 3 846 266

## Beschreibung

Die Erfindung bezieht sich auf die Verwendung von peroxogenierten Cycloolefinpolymeren.

Es sind unfunktionalisierte Cycloolefincopolymere bekannt (EP 156 464, EP 283 164, EP 407 870). Diese weisen eine hohe Transparenz und Härte sowie eine geringe Dichte auf. Außerdem sind sie chemisch nahezu inert und sehr wärmeformbeständig. Allerdings sind unfunktionalisierte Cycloolefincopolymere mit vielen Polymeren nur schlecht mischbar und weisen schlechte Hafteigenschaften auf. Darüber hinaus sind sie nur schlecht funktionalisierbar.

Es ist bekannt, daß sich doppelbindungshaltige Polymere durch Einwirkung von Sauerstoff peroxogenieren lassen (Houben, Weyl; Methoden der Organischen Chemie, Thieme-Verlag, Stuttgart, Band E 20/1 (1987) S. 639-641). So lassen sich z. B. EPDM-Copolymere aus Ethylen, Propylen und Dienmonomeren peroxogenieren, was auf die hohe Reaktivität der ungesättigten Funktionen im EPDM-Copolymeren zurückzuführen ist (J. Appl. Polym. Sci. 32, 5619 (1986); EP 230482 A1; EP 226676 A1). Da unfunktionalisierte Cycloolefincopolymere praktisch keine Doppelbindungen aufweisen, war bislang keine Methode zu ihrer Peroxogenierung bekannt.

Es wurde außerdem versucht doppelbindungsfreie Polyolefine, wie Polyethylen und Polypropylen zu peroxogenieren, wobei jedoch Probleme durch Vergelung (ausgeprägt beim Polyethylen) und Molekulargewichtsabbau (ausgeprägt beim Polypropylen) auftraten (Amer. Chem. Soc., Polym. Prepr. 31 (2) 555, (1988); US 3,388,067).

Außerdem sind Polyolefin-Wachse bekannt, die als Hilfsstoffe für viele technische Zwecke genutzt werden (Ullmanns Encyclopädie der technischen Chemie, Verlag Chemie, Bd.24 (1983) S.36-43 ff.). Es wird erwähnt, daß bei der Luftoxidation von Paraffinen peroxidische Zwischenstufen durchlaufen werden. Eine gezielte Darstellung peroxidischer Verbindungen ist jedoch nicht beschrieben. Außerdem sind sowohl unmodifizierte als auch modifizierte Polyolefin-Wachse opak bis trüb und für Anwendungen bei denen hohe Transparenz verlangt wird nicht geeignet. Zudem ist die Härte und Wärmeformbeständigkeit von Wachsen auf Basis von Ethylen und Propylen für viele Anwendungen zu gering.

Aus US-A-2,911,391 sind Hydroperoxide von Polymeren mit wiederholenden Einheiten bekannt, die einen cyclischen Kern und ein oxidierendes Wasserstoffatom enthalten.

Aus US-A-3,846,266 sind Hydroperoxide von Polymeren bekannt. Die hydroperoxidischen Derivate der Polymere sind als Härtungsmittel oder Vulkanisierungsmittel in natürlichen und synthetischen Elastomeren, zur Papierbeschichtung, als Ausgangsmaterial für gepropfte Copolymere und als Bestandteile in Harzen und Lacken verwendbar.

Es bestand somit die Aufgabe ein mit anderen Polymeren gut mischbares funktionalisierbares Polymer mit guten Hafteigenschaften zur Verfügung zu stellen, das gleichzeitig eine hohe Transparenz, Wärmeformbeständigkeit und Härte sowie ein chemisch inertes und hydrolysestabiles Polymerrückgrat aufweist und als Additiv in Wachsen, Klebstoffen und Schmiermitteln, als Haftvermittler, Weichmacher, Dispergiermittel, Trägermaterial für Pigmente, Primer für Kunststoff-, Metall- und Glasbeschichtung und Haftgrund für Metallisierung von Kunststoffen verwendet werden kann.

Es wurde gefunden, daß die Aufgabe durch die Verwendung eines Cycloolefinpolymers gelöst wird, enhaltend
A) 0,1 - 99,99 Gew.-%, bezogen auf die Gesamtmasse des Cycloolefincopolymers, polymerisierte Einheiten mindestens eines Cycloolefins,
B) 0 - 80 Gew.-%, bezogen auf die Gesamtmasse des Cycloolefincopolymers, polymerisierte Einheiten mindestens eines acyclischen Olefins und
C) 0,01 bis 50 % Gew., bezogen auf die Gesamtmasse des Cycloolefincopolymers, an peroxidischem Sauerstoff, der direkt an ein Kohlenstoffatom der polymerisierten Einheiten A) und/oder B) gebunden ist, wobei die polymerisierten Einheiten A) sich von mindestens einer Verbindung der Formeln I, II, III, IV, V, VI oder VII ableiten 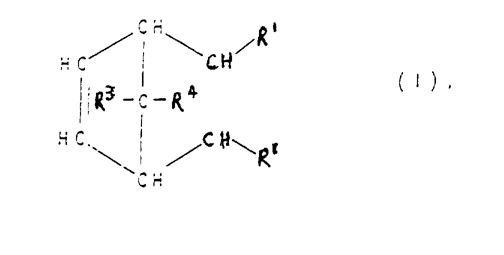 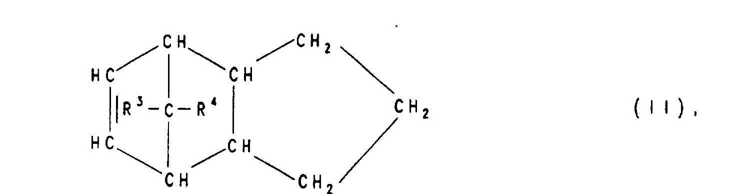 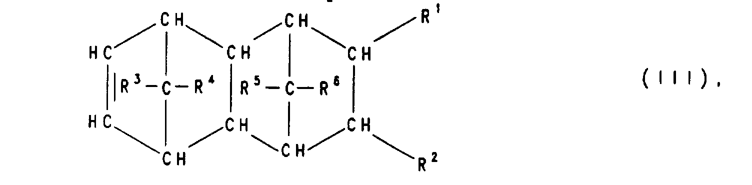 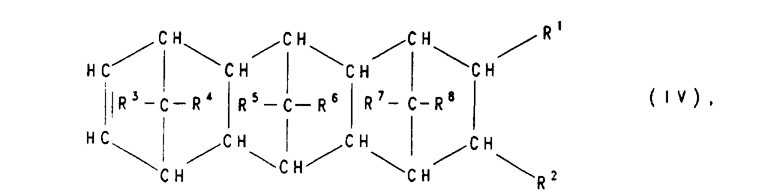 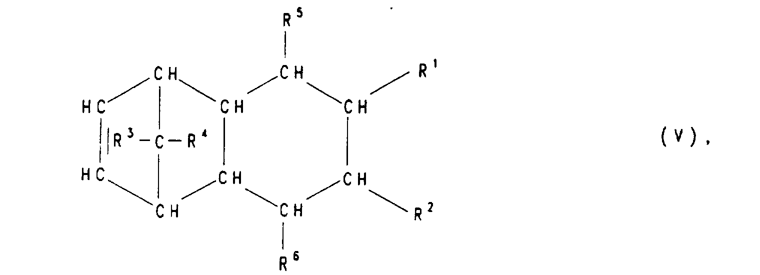 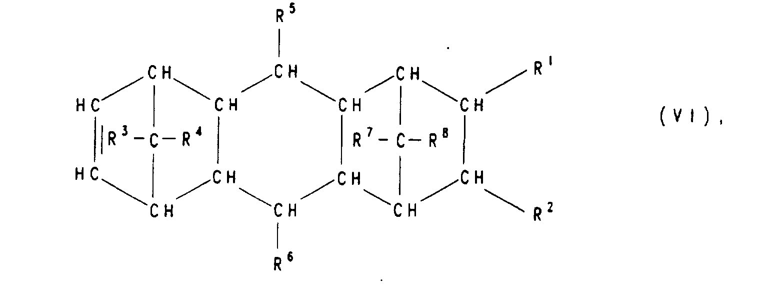 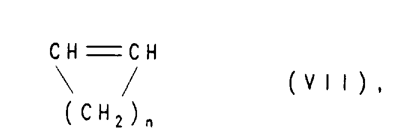 worin die Reste R¹, R², R³, R⁴, R⁵, R⁶, R⁷ und R⁸ gleich oder verschieden sind und ein Wasserstoffatom oder einen C₁-C₂₀-Kohlenwasserstoffrest beteuten, oder einen Ring bilden, wobei gleiche Reste in den verschiedenen Formeln I-Vl eine unterschiedliche Bedeutung haben können, und n eine Zahl von 2 bis 10 ist und die polymerisierten Einheiten B) sich von einem Alpha-Olefin mit 2 - 20 C-Atomen ableiten als Additive in Wachsen, Klebstoffen und Schmiermitteln, als Haftvermittler, Weichmacher, Dispergiermittel, Trägermaterial für Pigmente, Primer für Kunststoff-, Metall- und Glasbeschichtung und Haftgrund für Metallisierung von Kunststoffen.

Diese Cycloolefinpolymere sind prinzipiell bekannt und unterscheiden sich von den unfunktionalisierten Cycloolefinpolymeren durch eine bessere Mischbarkeit mit anderen Polymeren, verbesserte Haftungseigenschaften und leichtere Funktionalisierbarkeit, wodurch Fremdmoleküle wie z.B. Farbstoffe, Biocide, Proteine oder Enzyme an das ansonsten inerte Cycloolefincopolymer gebunden werden können.

Besonders bevorzugt sind Cycloolefine der Formeln I und III, insbesondere Norbornen und Tetracyclododecen, die durch (C₁-C₆)-Alkyl substituiert sein können.

Die polymerisierten Einheiten B) leiten sich bevorzugt von Alpha-Olefinen mit 2 - 20 C-Atomen ab, insbesondere Ethylen oder Propylen.

Besonders bevorzugt enthält das erfindungsgemäße Cycloolefinpolymere ein Cycloolefin und ein Alpha-Olefin als Comonomere. Bevorzugt sind Cycloolefinpolymere, die als Comonomere Norbornen oder Tetracyclododecen, die durch (C₁-C₆)-Alkyl substituiert sein können, und Ethylen enthalten. Besondere Bedeutung besitzen Ethylen-/Norbornenhaltige Copolymere.

Der peroxidische Sauerstoff ist an die polymerisierten Einheiten A) und/oder B) direkt - d.h. über eine kovalente Bindung - gebunden und liegt vorzugsweise als Peroxid (z.B. A-O-O-R oder B-O-O-R, wobei R bevorzugt ein organischer Rest ist, wie ein C₁-C₅₀-Kohlenwasserstoffrest (z.B. C₁-C₂₀-Alkyl oder C₆-C₂₀-Aryl), der auch Heteroatome wie Sauerstoff oder Stickstoff enthalten kann, oder eine zweite Polymerkette darstellt) und/oder als Hydroperoxid (z.B. A-O-O-H oder B-O-O-H) vor.

Das erfindungsgemäße Cycloolefinpolymere enthält polymerisierte Einheiten mindestens eines Cycloolefins in einem Anteil auf von 0,1-99,99 Gew.-%, bevorzugt 1-99 Gew.-%, besonders bevorzugt 10-90 Gew.-%, jeweils bezogen auf die Gesamtmasse des Cycloolefinpolymers.

Der Anteil polymerisierter Einheiten mindestens eines acyclischen Olefins beträgt 0-80 Gew.-%, bevorzugt 1-60 Gew.-%, besonders bevorzugt 2-50 Gew.-%, jeweils bezogen auf die Gesamtmasse des Cycloolefinpolymers.

Der Sauerstoffanteil des erfindungsgemäßen Cycloolefinpolymers beträgt 0,01-50 Gew.-%, bevorzugt 0,05-20 Gew.-%, besonders bevorzugt 0,1-10 Gew.-%, jeweils bezogen auf die Gesamtmasse des Cycloolefinpolymers.

Die erfindungsgemäßen Cycloolefinpolymere weisen bevorzugt eine Lösungsviskosität (eta) < 2 dl/g, besonders bevorzugt < 0,25 dl/g (in Decalin, bei 60°C, gemäß DIN 51562) auf. Das Molekulargewicht M_{w} ist bevorzugt < 13.000 g/mol. Die Polydispersität M_{w}/Mₙ ist bevorzugt < 4. Die Glastemperatur beträgt bevorzugt -20- 200°C, besonders bevorzugt 0-200°C.

Die erfindungsgemäß verwendeten Cycloolefinpolymere zeigen sehr gute Hafteigenschaften, was von großer technischer Bedeutung, z.B. bei der Laminierung von Kunststoffolien ist. Sie können in Beschichtungsmassen als Additive in Wachsen und Klebstoffen, sowie als Haftvermittler, Weichmacher, Schlichten oder Appreturen verwendet werden. Außerdem sind sie anwendbar als Dispergiermittel, und Trägermaterial für Pigmente und Masterbatches, Additiv in Schmiermitteln, Härter für härtbare Formmassen, Dichtungsmassen, Klebstoffe, Kaschier-, Kleb- und Beschichtungsmasse für Folien aus Metall und Kunststoff Laminierhilfsmittel, Haftgrund bzw. Primer für Kunststoff, Metall-, und Glasbeschichtungen, Haftgrund für Metallisierung von Kunststoffen, Oberflächenveredlung von Fasern, Garnen, Textilien, Leder, Holz aber auch anderer organischer Materialien, Zusatz in Polituren und Beschichtungen zum temporären Korrosionsschutz, Trennmittel in mineralischen Baustoffen, wie Zement und Gips oder Zusatz in Wachsen zur Erhöhung der Wärmestandfestigkeit von Kerzen.

Die erfindungsgemäß verwendeten peroxogenierten Cycloolefinpolymere eignen sich außerdem als Edukte für Folgereaktionen. Diese Folgereaktionen werden mit bekannten Derivatisierungsreagenzien durchgeführt und führen zu neuen funktionalisierten Cycloolefinpolymeren, die ebenfalls die geschilderten günstigen Eigenschaften der als Edukte fungierenden peroxogenierten Cycloolefinpolymere aufweisen. Diese funktionalisierten Cycloolefinpolymere können für die gleichen Zwecke verwendet werden wie die peroxogenierten Cycloolefinpolymere.

Durch die Folgereaktionen ist es möglich Cycloolefinpolymere mit besonderen funktionellen Einheiten zu versehen. Diese funktionellen Einheiten können Farbstoffe sein, die das Polymere einfärben, z.B. Azo- oder Anthrachinon-Farbstoffe. Wird ein fluoreszierender Farbstoff am Polymeren fixiert, z.B. Fluoreszein, so erhält man ein permanent fluoreszierendes Polymer. Auf ähnliche Weise können am Polymeren fixierte Biocide, z.B. organische Zinn-lV-Verbindungen zu einer dauerhaften Antifouling-Ausrüstung des Polymeren verwendet werden. Besonders materialsparend wird diese Ausrüstung nur an der Oberfläche eines bereits aus dem Polymeren geformten Gebildes, z.B. Faser, oder Folie durchgeführt. Gleichfalls ist es wünschenswert andere wertvolle Funktionseinheiten, z.B. Biomoleküle, oberflächlich anzubinden, wie es für sogenannte Bioassays nötig ist. Beispiele für Biomoleküle sind Proteine, insbesondere Enzyme oder Antikörper. Oberflächlich fixierte Antikörper finden Verwendung in Immunoassays.

Bei Anwendung von Reduktionsmitteln, wie sie z.B. in US 3,388,067, auf die hiermit ausdrücklich Bezug genommen wird, beschrieben sind, erhält man Alkohol-Funktionen. Diese lassen sich wiederum in bekannter Weise zu einer Vielzahl an weiteren Derivaten umsetzen. Bevorzugte Derivate sind Ester, Ether, Urethane und Thiourethane.

Durch Veresterungsreagentien werden am Polymeren gebundene Estergruppen erhalten. Als Veresterungsreagentien lassen sich eine Vielzahl bekannter Substanzen einsetzen. Neben Sulfonsäure- und Phosphonsäurederivaten sind insbesondere Carbonsäuren und deren Derivate geeignet. Aus der Gruppe der Carbonsäurederivate sind aktivierte Carbonylverbindungen besonders geeignet. Aktivierte Carbonylverbindungen können N-Acylazolide, insbesondere N-Acylimidazolide sein. Beispiele für N-Acylimidazolide sind N-Acetylimidazol, N-Octadecylimidazol, Adipoyldiimidazol, N-Benzoylimidazol und Isophthaloyldiimidazol. Ebenfalls geeignet sind Säurehalogenide, von denen wiederum die Säurechloride besonders bevorzugt sind. Beispiele für Säurechloride sind Propionylchlorid, 4-[4-Methoxyphenylazo]-benzoylchlorid, 4-Chloroformylphenoxyacetylchlorid, Trimesinsäurechlorid. Eine weitere Gruppe bevorzugter Veresterungsmittel sind Carbonsäureanhydride. Neben den normalen Anhydriden können auch gemischte Anhydride verwendet werden. Beispiele sind Acetanhydrid, Phthalsäureanhydrid und gemischte Anhydride der Ameisensäure bzw. Chloroformiate.

Wendet man Veretherungsreagentien an, so werden Ether-Gruppen erhalten. Auf diese Weise können eine Vielzahl anderer funktioneller Gruppen an das Cycloolefinpolymer gebunden werden. So kann man zum Beispiel durch Veretherung mit Chloressigsäure eine -CH₂-COOH Gruppierung in das Polymer einführen.

Durch polymeranaloge Umsetzung von am Polymeren gebundenen Alkohol-Funktionen mit Isocyanaten bzw. Isothiocyanaten lassen sich Urethane bzw. Thiourethane erhalten. Beispielsweise ist Isocyanatofluoreszein geeignet um Cycloolefincopolymere fluoreszierend auszurüsten. In vergleichbarer Weise liefert die Umsetzung mit 3-(lsothiocyanatoethylcarbamoyl)-2,2,5,5-tetramethyl-1-pyrrolidinoxyl, einem stabilen, freien Radikal, ein spingelabeltes Cycloolefincopolymer. 4-lsocyanatophenylazid erlaubt nach Umsetzung mit den Hydroxylgruppen des Cycloolefincopolymers die hohe Reaktivität der dann polymerfixierten Azidgruppe für weitere Umsetzungen z.B. mit Enzymen auszunutzen.

Weiterhin ist es möglich von der Alkohol-Funktion über Oxydation oder vom Peroxid über eine säurekatalysierte Umlagerung direkt zu einer Carbonylfunktion zu gelangen. Diese kann Bestandteil eines Aldehyd-, Keton- oder Carbonsäure-Funktion sein. Diese Funktionen lassen sich wiederum nach bekannten Methoden mit Alkoholen zu Acetalen und Ketalen umsetzen. Beispiele für Alkohole sind Methanol, Ethanol, Ethylenglykol, Glycerin, Pentaerythrit. Mit entsprechenden Mercaptanen sind Thioketale und Thioacetale zugänglich. Bevorzugte Mercaptane sind Mercaptoethanol, Mercaptoessigsäure, Mercaptomilchsäure und Mercaptopropionsäure.

Darüberhinaus kann der thermisch induzierte Zerfall des peroxogenierten Cycloolefinpolymers ausgenutzt werden, um Anpfropfung von α,β-ungesättigten Verbindungen zu erzielen. Wendet man z. B. Maleinsäureanhydrid an, so erhält man eine über Sauerstoff gebundene Äpfelsäureeinheit. Werden α,β-ungesättigte Derivate eingesetzt, die gewöhnlich radikalisch polymerisierbar sind, so werden Pfropfcopolymerisate erhalten.

Die Folgereaktionen mit den Derivatisierungsreagenzien können in einer Reaktionsstufe (in-situ) mit der Peroxogenierungsreaktion oder auch nach der Peroxogenierungsreaktion (2-Stufen-Verfahren) durchgeführt werden.

Die vorliegende Erfindung zeigt außerdem ein Verfahren zur Herstellung von peroxogenierten Cycloolefinpolymeren, dadurch gekennzeichnet, daß ein unfunktionalisiertes Cycloolefincopolymer in Gegenwart von Radikalen mit Sauerstoff zur Reaktion gebracht wird.

Bevorzugt enthält das unfunktionalisierte Cycloolefinpolymer 0,1 - 100 Gew.-%, bezogen auf die Gesamtmasse des COC, polymerisierte Einheiten mindestens eines Cycloolefins der Formeln I, II, III, IV, V, VI oder VII, 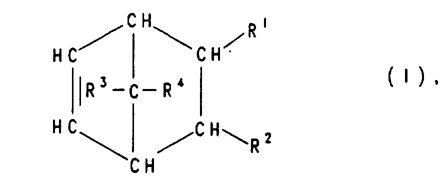 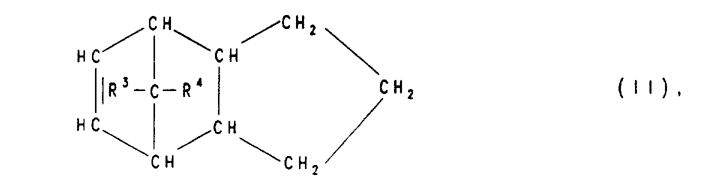 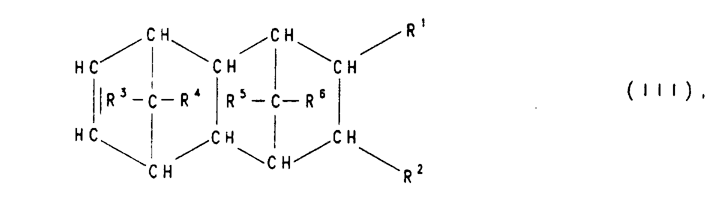 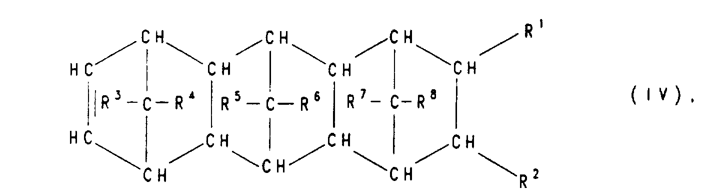 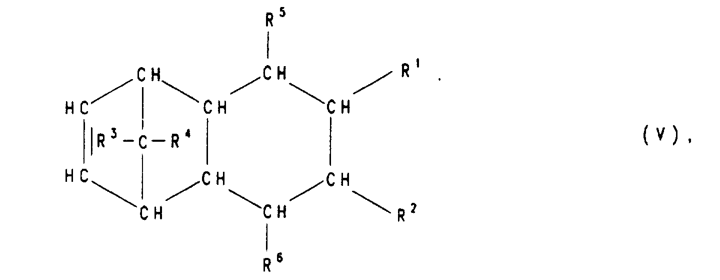 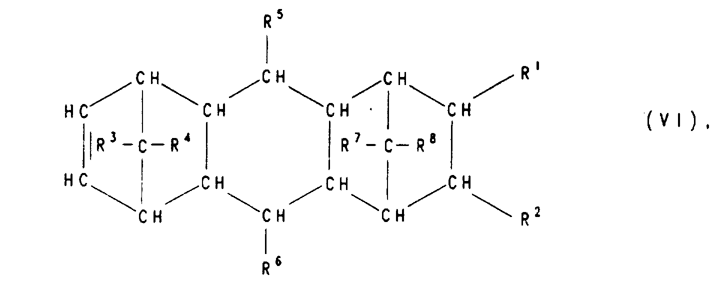 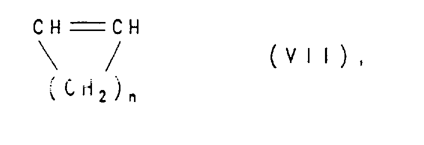 worin die Reste R¹, R², R³, R⁴, R⁵, R⁶, R⁷ und R⁸ gleich oder verschieden sind und ein Wasserstoffatom oder einen C₁-C₂₀-Kohlenwasserstoffrest wie C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen Ring bilden, wobei gleiche Reste in den verschiedenen Formeln I-VI eine unterschiedliche Bedeutung haben können, und n eine Zahl von 2 bis 10 ist, und

0 bis 99 Gew.-%, bezogen auf die Gesamtmasse des Cycloolefinpolymers, polymerisierte Einheiten mindestens eines acyclischen Olefins mit 2-20 C-Atomen, insbesondere solchen der Formel VIII 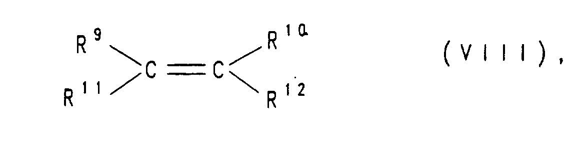 worin R⁹, R¹⁰, R¹¹ und R¹² gleich oder verschieden sind und ein Wasserstoffatom oder einen C₁-C₈-Alkylrest bedeuten.

Bevorzugt bestehen die unfunktionalisierten Cycloolefinpolymere aus einem oder mehreren Cycloolefinen, insbesondere polycyclischen Olefinen der Formeln I oder III, und einem oder mehreren acyclischen Olefinen der Formel VIII, insbesondere α-Olefinen mit 2-20 C-Atomen. Insbesondere sind Cycloolefincopolymere bevorzugt, die aus einem polycyclischen Olefin der Formel I oder III und einem acylischen Olefin der Formel VIII bestehen.

Bevorzugt sind Cycloolefinpolymere, die polycyclische Olefine mit Norbornengrundstruktur, besonders bevorzugt Norbornen oder Tetracyclododecen, enthalten. Bevorzugt sind auch Cycloolefinpolymere, die acyclische Olefine mit endständigen Doppelbindungen wie α-Olefine, besonders bevorzugt Ethylen oder Propylen, enthalten. Besonders bevorzugt sind Norbornen/Ethylen- und Tetracyclododecen/Ethylen-Copolymere. Der Anteil des acyclischen Polymers der Formel VIII beträgt 0 bis 99 Gew.-%, bevorzugt 5-80 Gew.-%, besonders bevorzugt 10-60 Gew.-%, bezogen auf die Gesamtmasse des Cycloolefinpolymers.

Die unfunktionalisierten Cycloolefinpolymere werden hergestellt bei Temperaturen von -78 bis 150°C und einem Druck von 0,01 bis 64 bar, in Gegenwart eines oder mehrerer Katalysatoren, welche einen Cokatalysator und eine Übergangsmetallverbindung enthalten. Solche Katalysatorensysteme und die herstellung der in dem erfindungsgemäßen Verfahren eingesetzten Cycloolefinpolymers sind z.B. beschrieben in EP 203 799, EP 283 164, EP 407 870, EP 485 893, EP 503 422, DD 237 070, EP 203 799, auf die hiermit ausdrücklich Bezug genommen wird.

Das Verfahren kann als kontinuierlicher oder diskontinuierlicher Prozeß durchgeführt werden. Dies ist dem Fachmann bekannt, z.B. aus Ullmann's Encycl. Ind. Chem. B 4 "Principles of Chemical Reaction Engineering and Plant Design", VCH Weinheim (1993), insbesondere S. 87-120, auf die hiermit ausdrücklich Bezug genommen wird.

Für die Ausführung des Verfahrens können die Reaktanden in beliebiger Reihenfolge zusammengegeben werden. Es können auch Hilfsstoffe wie Lösemittel, Dispergiermittel und Radikalstarter anwesend sein. Sie sind aber nicht zwingend notwendig.

In einer bevorzugten Vorgehensweise wird das unfunktionalisierte Cycloolefinpolymere vorgelegt und mit den Hilfsstoffen mechanisch abgemischt, wobei übliche Mischapparaturen wie Rührbehälter, Knetmischer oder verschiedene Extrudertypen eingesetzt werden können.

Die Zudosierung des Sauerstoff, der gegebenenfalls mit Inertgasen verdünnt sein kann, ist auf unterschiedliche Weise möglich. In technisch einfacher Weise erfolgt die Zumischung über den im Reaktionsbehältnis vorhandenen Gasraum.

In einer weiteren Ausführungsform wird das sauerstoffhaltige Gas unter Druck so eingeblasen, daß eine zusätzliche mechanische Durchmischung nicht mehr notwendig ist. Auf ähnliche Weise kann die Reaktionsmischung mit oder ohne zusätzliche mechanische Durchmischung dem Sauerstoff-Strom entgegengeführt werden. Vorteilhaft macht man sich hierbei die Schwerkraft zunutze, z.B. in einer Füllkörperkolonne. Durchaus geeignet ist auch die Verwendung einer Blasensäule, in der die aufsteigenden Gasblasen der abwärtsfließenden Polymerlösung entgegenströmen. Bevorzugt ist jedoch das Einmischen durch Eindiffundieren bzw. Einperlen. Das Eindiffundieren gelingt z. B. über semipermeable Membranen, die bevorzugt eine hohe Sauerstoffpermeabilität besitzen, z.B. vernetzte Polysiloxane. Einperlen des sauerstoffhaltigen Gases gelingt gut über perforierte Separatoren, die bevorzugt aus metallischen oder keramischen Materialien aufgebaut sein können. Im einfachsten Fall können dies Lochplatten, Mehrlochdüsen oder Glasfritten sein. Insbesondere werden kommerziell erhältliche Begasungsrührer verwendet, die durch ihre hohle Bauweise eine feine Dispersion des Gases erlauben.

Das Reaktionsgemisch kann heterogen oder homogen bezüglich des Polymeren sein. Heterogene Bedingungen liegen vor, wenn die Reaktion in Wirbelschicht (fest/Gas) in Dispersion (fest/flüssig) oder in Suspension (flüssig/flüssig) durchgeführt wird. Homogene Bedingungen liegen vor, wenn die Reaktion in Schmelze oder Lösung durchgeführt wird. Sauerstoff liegt unter diesen Bedingungen sowohl gasförmig als auch gelöst in der festen bzw. flüssigen Phase vor.

Im Wirbelschichtverfahren wird das pulvrige Polymer zunächst mit einer Lösung des Radikalstarters imprägniert und mittels eines Preßluftstroms in die vorgeheizte Wirbelkammer befördert. In dieser wird der vortemperierte Sauerstoffstrom so eingestellt, daß ein Auftreiben des Pulvers erzielt wird. Nach Ablauf der Reaktionszeit wird der Gasstrom so verstärkt, daß das Pulver über Kopf ausgetragen, in einem Windsichter klassiert und in einem Cyclon abgeschieden werden kann. Etwaige Feinstaubanteile werden in einem nachgeschalteten Filter niedergeschlagen. Beim Wirbelschichtverfahren können Temperaturen von 0-200°C angewendet werden. Bevorzugt werden Temperaturen von 50-150°C, besonders bevorzugt 60-120°C. Um ein Verkleben der Polymerpartikel möglichst zu vermeiden, soll die Reaktionstemperatur die Glastemperatur des Reaktionsgemisches nicht übersteigen. In einer speziellen Ausführungsform wird die Reaktion bei einer relativ hohen Temperatur begonnen (130°C - 150°C) und im Verlauf einer Reaktionszeit kontinuierlich auf 90°C - 110°C gesenkt. Nach Windsichten erhält man im allgemeinen mehr als 90% der eingesetzten Korngrößenverteilung.

Bei der Umsetzung in Dispersion und Suspension wird das Polymer unter Rühren in ein Lösungsmittel eingetragen, das im allgemeinen ein Gemisch mehrerer Lösemittel ist. Nach Zugabe von Hilfsmitteln kann ein Radikalstarter zugegeben und die Reaktion durch Erhöhen der Temperatur in Gang gesetzt werden. Nach Ablauf der Reaktionszeit wird abgekühlt, und das peroxigenierte Polymer abgetrennt durch Zentrifugieren oder Filtrieren. In einer bevorzugten Ausführungsform besteht das Lösungsmittelgemisch aus Wasser und einem Kohlenwasserstoff, z. B. einem aromatischen oder aliphatischen Kohlenwasserstoff, z. B. Toluol, Xylol oder Benzin. Als Radikalbildner können wasserlösliche oder wasserunlösliche Radikalbildner bzw. ein Gemisch aus beiden zugegeben werden, wobei die Dosierung wahlweise einmal zu Beginn, mehrmals während der Reaktion oder kontinuierlich erfolgen kann. Falls zwei oder mehr Starter eingesetzt werden, können diese auch unabhängig voneinander eingesetzt werden. Nach Ablauf der Reaktionszeit ist es besonders vorteilhaft das organische Lösemittel durch Wasserdampfdestillation zu entfernen, wodurch nicht klebende Partikel erhalten werden. Vorsichtsmaßnahmen bezüglich Verkleben und Verklumpen sind auch bei der Reaktionsführung in Dispersion und Suspension zu beachten. Außer durch die Wahl einer Reaktionstemperatur unterhalb der Glastemperatur des Cycloolefinpolymeren kann das Verkleben der Polymerpartikel auch durch Zugabe eines üblichen Dispergier-/Suspensionshilfsmittels das anorganisch oder organisch sein kann, verhindert werden. Typische anorganische Additive sind Silikate, wie Bentonit. Organische Additive können Tenside wie Alkalisalze organischer Carbonsäuren oder Alkylsulfate sein. Hilfreich sind darüberhinaus Schutzkolloide wie Poly(N-vinylpyrrolidon) oder Polyvinylalkohol.

Bei der Umsetzung in Schmelze kann das Polymer zunächst mit einer entsprechenden Menge des Radikalbildners imprägniert werden, wobei gleichzeitig gegebenenfalls zusätzliche Hilfsstoffe wie hochsiedende Lösemittel, die im Sinne von Weichmachern wirken, zugesetzt werden. Das getrocknete Polymer wird mittels einer Fördereinrichtung in einen Schneckenextruder befördert, wobei sich die Wahl der Temperaturzonen entsprechend der Viskosität der Schmelze bei Reaktionstemperatur richtet. Sauerstoff wird an der ansonsten für Entgasungszwecke vorgesehenen Öffnung aufgedrückt. Auf dem Fachmann bekannte Weise wird der Gasdrucl< auf dem im Extruder anstehenden Druck eingestellt, wobei zwischendurch immer wieder entspannt werden sollte, um eventuell auftretende Zerfallsprodukte zu entfernen. Der austretende Polymerstang kann weiter konfektioniert werden, z.B. durch Heißabschlag granuliert und/oder zu Pulver zermahlen werden. Die Reaktionstemperatur sollte ungefähr 50-150°C oberhalb der Glastemperatur des Cycloolefinpolymers liegen, um eine ausreichend geringe Schmelzeviskosität zu erhalten. Somit ist die Peroxogenierung in der Schmelze nur durchführbar, wenn die Glastemperatur des Reaktionsgemisches unter der Zersetzungstemperatur des peroxogenierten Cycloolefinpolymers liegt. In einer speziellen Ausführungsform wird ein Cycloolefinpolymers mit einer Glastemperatur zwischen 20 und 60°C, dem weniger als 1 Gew.-% eines Radikalstarters zugemischt wurden, in einem schnellaufenden Doppelschnecken-Extruder mit Sauerstoff bei einer Massetemperatur von 100-150°C umgesetzt. Die Verweilzeit beträgt dabei ungefähr 1-10 min.

Wird die Reaktion in Lösung durchgeführt, so legt man zweckmäßig das Lösemittel, das auch ein Gemisch mehrerer Komponenten sein kann, vor und trägt das Polymer unter permanenter Turbinierung ein. Es hat sich bewährt, durch kontinuierliche Temperaturerhöhung der mit steigender Polymerkonzentration zunehmender Viskosität entgegen zu wirken. Die klare Lösung wird mit der Lösung des Initiators versetzt und gleichzeitig über eine Düsenplatte Sauerstoff in die Lösung eingeblasen. Durch kräftiges Rühren wird eine ausreichend gute Verteilung des Gases in der Lösung erzielt. Für die Reaktion in Lösung eignen sich vor allem organische Lösungsmittel. Bevorzugt sind aromatische und aliphatische Lösungsmittel, die auch chloriert sein können. Insbesondere eignen sich Benzol, Toluol, Xylol, Chlorbenzol, Chloroform oder Tetrachlorethylen. Die Reaktionstemperatur liegt bei -20 - 200°C, bevorzugt 0 - 110 °C, insbesondere bei 50 - 90°C. Die Reaktionstemperatur sollte nicht über der Zersetzungstemperatur des erhaltenen peroxogenierten Cycloolefinpolymers liegen.

Der Partialdruck des Sauerstoffs kann bei allen Verfahrensvarianten in weiten Bereichen variiert werden. Er beträgt 0,05-100 bar, bevorzugt 0,1-10 bar, besonders bevorzugt 0,15-1 bar. Inerte·Gase wie Stickstoff oder Edelgase können als Verdünnungsmittel anwesend sein. Besonders geeignet ist Luft, die gegebenenfalls gegenüber Normluft mit Sauerstoff an- oder abgereichert werden kann, wodurch Sauerstoffgehalte von 10-90 Vol.-% einstellbar sind.

Die Reaktionszeit kann in weiten Bereichen von 1 Minute-100 h variiert werden und richtet sich nach den gewählten Bedingungen und dem erwünschten Sauerstoffgehalt. Nach Reaktionszeiten, die länger als 100 h sind, wird im allgemeinen keine Erhöhung des Sauerstoffgehalts des Cycloolefinpolymers mehr erhalten.

Die in der Reaktion eingesetzten Radikale können auf jede beliebige Weise erzeugt werden. Die Radikalkonzentration im Reaktionsgemisch beträgt 10⁻³-10⁻¹³ mol/l, bevorzugt 10⁻⁵-10⁻¹¹ mol/l, besonders bevorzugt 10⁻⁶-10⁻¹⁰ mol/l.

Eine Möglichkeit zur Radikalerzeugung ist die Verwendung aktinischer Strahlung, z.B. UV, alpha-, beta- und gamma-Strahlung. Im Fall von UV-Strahlung, die durch dem Fachmann bekannte Quellen, z.B. Quecksilber-Hochdruckdampflampen, erzeugt werden kann, ist die Verwendung von Sensibilisatoren, z.B. Benzophenon oder Anthracen günstig.

Eine weitere Möglichkeit zur Radikalerzeugung ist die Einbringung mechanischer Energie beim schnellen Rühren hochviskoser Lösungen, sowie der Einsatz von Ultraschall, der z.B. durch sogenannte Sonotroden erzeugt werden kann.

In einer bevorzugten Ausführungsform werden die Radikale durch thermische Zersetzung von Radikalbildnern erzeugt, die über die Zugabe von Aktivatoren auch zum induzierten Zerfall angeregt werden können. Die Temperaturabhängigkeit des Zerfalls wie auch der häufig auftretende Lösemitteleinfluß wird tabellarisch z.B. in J. Brandrup, E.H. Immergut, Polymer Handbook, Wiley, New York, 1989, Kap.ll, S.1-59, beschrieben.

Es können Radikalstarter unterschiedlicher chemischer Struktur eingesetzt werden. Durch Wahl von Gemischen von Radikalbildnern, die entweder kontinuierlich oder diskontinuierlich zugegeben werden können, läßt sich die Reaktion steuern. Darüberhinaus ist es sinnvoll durch das Abfahren verschiedener Temperaturprogramme die Radikalbildungsrate zu kontrollieren. Außerdem ist es möglich die Zerfallrate von Radikalbildnern durch UV-Strahlung zu erhöhen.

Der Radikalstarter kann mit Inertmitteln phlegmatisiert werden oder bereits mit dem zu verwendeten Polymeren als Masterbatch abgemischt sein.

Bevorzugt werden Radikalbildner aus der Klasse der Azo- und Peroxidverbindungen eingesetzt. Aus der Gruppe der Azoverbindungen haben sich aliphatische vom Typ des Azoisobutyronitrils besonders bewährt. Aus der Gruppe der Peroxide sind sowohl symmetrisch wie asymmetrisch substituierte Verbindungen geeignet. Speziell sind Dialkylperoxide (z.B.Dicumylperoxid) wie auch Diacylperoxide (z.B. Dibenzoylperoxid) geeignet. Darüberhinaus eignen sich auch Perester wie Perbenzoesäure-tert.-butylester oder Hydroperoxide wie Cumylhydroperoxid. Wird das Verfahren in Gegenwart von Wasser durchgeführt, sind Wasserstoffperoxid oder dessen anorganische Derivate, z.B. Natriumperoxid vorteilhaft einsetzbar.

Der Radikalstarter wird in Konzentrationen von 0,01 - 10 Gew.-%, bevorzugt 0,1 - 5 Gew.-%, bezogen auf das Gesamtgewicht des unfunktionalisierten Cycloolefinpolymers, eingesetzt.

Auch können Schwermetalle in Form ihrer anorganischen oder organischen Salze die Radikalbildung in Gegenwart von Sauerstoff fördern. Besonders wirksam sind Cobaltstearat, Cobaltnaphthanat und Cersulfat.

In einer besonders bevorzugten Ausführungsform wird Luft mit einer Peroxoverbindung in einem aromatischen Kohlenwasserstoff bei Temperaturen unter 100°C verwendet.

Die Lösung des peroxogenierten Cycloolefinpolymere kann direkt weiterverwendet werden. Soll das Polymere als solches isoliert werden, kann dies nach bekannten Verfahren vom Lösungsmittel befreit werden, z.B.:
1. Abstrippen des Lösungsmittels, z.B. durch Wasserdampfdestillation,
2. Verdampfen des Lösungsmittels, z.B. durch Sprühtrocknung oder Eindicken im Fallfilmverdampfer, der ggf. im Vakuum betrieben wird, und bevorzugt durch
3. Ausfällung in einem mit dem Polymerlösungsmittel mischbaren Nichtlösungsmittel, z.B. Methanol oder besonders bevorzugt Aceton.

Durch Waschen mit Lösungsmitteln, die das Polymere nicht auflösen, können Fremdstoffe, z.B. Zerfallsprodukte des Radikalbildners, leicht entfernt werden. Die Trocknung kann bei Normaldruck oder vermindertem Druck in Inertgas oder unter Sauerstoff erfolgen. Bevorzugt ist die Trocknung an Luft.

Das Verfahren arbeitet bei technisch interessanten Temperaturen und führt zu keinem nennenswerten Molekulargewichtsabbau.

### Beispiele

Es bedeuten:
eta = Lösungsviskosität (Decalin, 60°C, gemäß DIN 51562) in dl/g,
M_{w} = Molekulargewicht in g/mol,
M_{w}/Mₙ = Polydispersität, gemessen mit Gelpermeationschromatographie (o-Dichlorbenzol, 135°C, Polystyrolstandard),
Äquivalentgewicht = g Polymer/mol Sauerstoff (jodometrisch bestimmt)

### Beispiel 1

25 g eines unfunktionalisierten Cycloolefincopolymeren COC, das je 50 mol-% Ethylen- und Norbornen-Repetiereinheiten enthält und charakterisiert ist durch eine Lösungsviskosität eta (Decalin, 60°C) von 0,3 dl/g und dem durch Gelpermeationschromatographie (o-Dichlorbenzol, 135°C) bestimmten Molekulargewicht M_{w} = 14600 g/mol mit einer Polydispersität M_{w}/Mₙ = 3,2 wurde zusammen mit 100 mg (609 mmol) Azoisobutyronitril (AIBN) in 200 ml Chlorbenzol gelöst und reiner Sauerstoff mittels einer Glasfritte durch die Lösung geperlt. Unter Rühren wurde die Lösung auf 80°C erwärmt. Nach 8 h wird nochmals 100 mg AIBN zugegeben. Nach weiteren 6 h wurde die klare, gelbe Lösung durch Eintropfen in Aceton aufgearbeitet. Das ausgefallene, farblose peroxogenierte Polymere wurde abgesaugt und mehrmals mit Aceton gewaschen bis das Filtrat farblos war. Nach Trocknung bei Raumtemperatur wurden 23,3 g peroxogeniertes COC mit einem Äquivalentgewicht von 10500 g/mol OOH (0,31 Gew.-% Sauerstoff), M_{w} = 12200 g/mol, M_{w}/Mₙ = 2,6 und eta = 0,22 dl/g erhalten.

### Beispiel 2

Es wurde verfahren wie in Beispiel 1, jedoch wurde
a) ein COC mit den Kenndaten eta = 0,20 dl/g, M_{w} = 11500 g/mol, M_{w}/Mₙ = 2,7 eingesetzt und
b) Chlorbenzol durch Toluol ersetzt.

Es wurden 24,7 g eines peroxogeniertes COC erhalten:
Äquivalentgewicht von 4170 g/mol OOH (0,77 Gew.-% Sauerstoff), M_{w} = 9700 g/mol, M_{w}/Mₙ = 2,6, eta = 0,20 dl/g.

### Beispiel 3

Es wurde wie in Beispiel 2 verfahren, jedoch wurden
a) 120 g des COC eingesetzt und
b) 3 x 100 mg (3 x 609 mmol) AIBN eingesetzt, wobei nach 8 bzw. 16 h je einmal nachdosiert wurde.

Nach insgesamt 24 h Reaktionszeit wurde das Reaktionsgemisch aufgearbeitet. Es wurden 118 g eines peroxogeniertes COC erhalten: Äquivalentgewicht von 3560 g/mol OOH (0,9 Gew.-% Sauerstoff), M_{w} = 11600 g/mol, M_{w}/Mₙ = 2,6; eta = 0,20 dl/g.

### Beispiel 4

Es wurde gemäß Beispiel 2 verfahren, jedoch wurde AIBN durch 486 mg (2 x 609 mmol) Dilauroylperoxid ersetzt, das in kleinen Portionen im Abstand von 1 h zugegeben wurde.

Nach Trocknung wurden 24,9 g des peroxogenierten COC mit einem Äquivalentgewicht von 6370 g/mol OOH (0,5 Gew.-% Sauerstoff), M_{w} = 10500 g/mol, M_{w}/Mₙ = 2,6, eta = 0,14 dl/g erhalten.

### Beispiel 5

Das peroxogenierte COC aus Beispiel 3 wurde in Methylenchlorid gelöst (20 % w/v) und auf eine Glasoberfläche aufgerakelt. Nach Abdunsten des Lösungsmittels über Nacht wurde an dem erhaltenen Polymerfilm ein Kontaktwinkel von 85° (Wasser), 75° (Glycerin) und 66° (Glykol) gemessen (Randwinkelmeßgerät G1, Fa. Krüss, Hamburg).

### Vergleichsbeispiel A:

Aus dem unfunktionalisierten COC aus Beispiel 1 (je 50 % Ethylen- und Norbornen-Repetiereinheiten) wurde wie in Beispiel 6 ein Film hergestellt. Es wurde ein Kontaktwinkel von 92° (Wasser), 78° (Glycerin) und 62° (Glykol) gemessen (Randwinkelmeßgerät G1, Fa. Krüss, Hamburg).

### Beispiel 6 (Färbeversuch mit einem Reaktivfarbstoff)

Der Polymerfilm aus Beispiel 5 wurde mit einer wäßrigen Lösung des Reaktivfarbstoffs Remazol Brilliantblau (Hersteller: Hoechst AG; CA-Nr. 2580-78-1) behandelt. Als Hilfsstoff wurde Natriumsulfathydrat zugesetzt. Durch Sodazusatz wurde auf pH = 11 eingestellt. Innerhalb 30 min wurde von Raumtemperatur zunächst auf 60°C erwärmt. In weiteren 30 min wurde bis zum beginnenden Sieden erhitzt. Der Film ließ sich mit heißem Wasser klarspülen und zeigte eine deutliche Blaufärbung. Auch durch Einwirken von Dimethylformamid (DMF) bei Raumtemperatur ließ sich die Färbung nicht entfernen.

### Vergleichsbeispiel B:

Die Polymerfolie aus Vergleichsbeispiel A wurde dem in Beispiel 6 geschilderten Färbevorgang unterzogen. Die erhaltene schwache Blaufärbung konnte mit DMF restlos entfernt werden.

### Beispiel 7 (Haftung auf Unterlage)

1 g des in Beispiel 1 hergestellten COC wurden in 10 ml Toluol gelöst und auf ein mit Schwefelsäure gereinigtes handelsübliches Fensterglas aufgerakelt. Nach Stehenlassen bei 20°C über Nacht war das Lösemittel verdampft und das Polymer hatte sich als ca. 10 µm dicker Film auf der Glasplatte abgelagert. Die Haftung dieses Polymerfilms auf dem Glas wurde durch folgende Experimente untersucht:
1. Über den Film wurde ein Streifen Tesa-Film® geklebt und der Klebestreifen ruckartig abgerissen. Dabei blieb der Polymerfilm komplett auf der Glasoberfläche haften.
2. Der Film wurde mittels eines scharfen Messers mehrfach kreuzweise geritzt. Auf den eingeritzten Film wurde ein Streifen Tesa-Film® geklebt und ruckartig abgerissen. Auch bei dieser Behandlung blieb der Film auf dem Substrat haften.
3. Die Glasplatte mit dem Polymerfilm wurde für 5 Minuten in Wasser eingetaucht. Anschließend ließ sich der Film leicht vom Glas ablösen.

### Vergleichsbeispiel C:

1 g des unmodifizierten COC aus Beispiel 1 (je 50 % Ethylen- und Norbornenrepetierinheiten) wurde in 10 ml Toluol gelöst und auf eine Glasoberfläche aufgerakelt. Nach Stehenlassen bei 20°C über Nacht war das Lösemittel verdampft und das Polymer hatte sich als ca. 10 µm dicker Film auf der Glasplatte abgelagert. Die Haftung dieses Polymerfilms auf dem Glas wurde durch folgende Experimente untersucht:
1. Über den Film wurde ein Streifen Tesa-Film® geklebt und der Klebestreifen ruckartig abgerissen. Dabei riß der Polymerfilm komplett von der Glasoberfläche ab.
2. Der Film wurde mittels eines scharfen Messers mehrfach kreuzweise geritzt. Auf den eingeritzten Film wurde ein Streifen Tesa-Film® geklebt und ruckartig abgerissen. Auch bei dieser Behandlung wurde der COC-Film vollkommen vom Glas abgelöst.
3. Die Glasplatte mit dem Polymerfilm wurde in Wasser eingetaucht. Dabei löste sich der Film bereits beim Eintauchvorgang vom Glas ab.

### Beispiel 8

25 g eines unfunktionalisierten Cycloolefincopolymeres, das je 50 mol-% Ethylen- und Norbornen-Repetiereinheiten enthält und charakterisiert ist durch eine Lösungsviskosität eta (Decalin, 60°C) von 0,3 dl/g und dem durch Gelpermeationschromatographie (o-Dichlorbenzol, 135°C) bestimmten Molekulargewicht M_{w} = 14600 g/mol mit einer Polydispersität M_{w}/Mₙ = 3,2 wurde zusammen mit 100 mg (609 mmol) Azoisobutyronitril (AIBN) in 200 ml Chlorbenzol gelöst und Druckluft mittels einer Glasfritte durch die Lösung geperlt. Unter Rühren wurde die Lösung auf 80°C erwärmt. Nach 8 h wird nochmals 100 mg AIBN zugegeben. Nach weiteren 6 h wurde die klare, gelbe Lösung durch Eintropfen in Aceton aufgearbeitet. Das ausgefallene, farblose peroxogenierte Polymere wurde abgesaugt und mehrmals mit Aceton gewaschen bis das Filtrat farblos war. Nach Trocknung bei Raumtemperatur wurden 24,1 g Polymer mit einem Äquivalentgewicht von 6140 g/mol OOH (0,52 Gew.-% Sauerstoff), erhalten. M_{w} = 17800 g/mol, M_{w}/Mₙ = 2,4; eta = 0,26 dl/g.

### Beispiel 9

Das peroxogenierte Cycloolefincopolymere aus Beispiel 8 wurde in Methylenchlorid gelöst (20 % w/v) und auf eine Glasoberfläche aufgerakelt. Nach Abdunsten des Lösungsmittels über Nacht wurde an dem erhaltenen Polymerfilm ein Kontaktwinkel von 86° (Wasser), 75° (Glycerin) und 67° (Glykol) gemessen (Randwinkelmeßgerät G1, Fa. Krüss, Hamburg).

### Vergleichsbeispiel D:

Aus dem unfunktionalisierten Cycloolefincopolymeren aus Beispiel 8 (je 50 % Ethylen- und Norbornen-Repetiereinheiten) wurde wie in Beispiel 2 ein Film hergestellt. Es wurde ein Kontaktwinkel von 92° (Wasser), 78° (Glycerin) und 62° (Glykol) gemessen (Randwinkelmeßgerät G1, Fa. Krüss, Hamburg).

### Beispiel 10 (Färbeversuch mit einem Reaktivfarbstoff)

Der Polymerfilm aus Beispiel 9 wurde mit einer wäßrigen Lösung des Reaktivfarbstoffs Remazol Brilliantblau (Hersteller: Hoechst AG; CA-Nr. 2580-78-1) behandelt. Als Hilfsstoff wurde Natriumsulfathydrat zugesetzt. Durch Sodazusatz wurde auf pH = 11 eingestellt. Innerhalb 30 min wurde von Raumtemperatur zunächst auf 60°C erwärmt. In weiteren 30 min wurde bis zum beginnenden Sieden erhitzt. Der Film ließ sich mit heißem Wasser klarspülen und zeigte eine deutliche Blaufärbung. Auch durch Einwirken von Dimethylformamid (DMF) bei Raumtemperatur ließ sich die Färbung nicht entfernen.

### Vergleichsbeispiel E:

Die Polymerfolie aus Vergleichsbeispiel A wurde dem in Beispiel 7 geschilderten Färbevorgang unterzogen. Die erhaltene schwache Blaufärbung konnte mit DMF restlos entfernt werden.

### Beispiel 11 (Haftung auf Unterlage)

1 g des in Beispiel 8 hergestellten Polymeren wurden in 10 ml Toluol gelöst und auf ein mit Schwefelsäure gereinigtes handelsübliches Fensterglas aufgerakelt. Nach Stehenlassen bei 20°C über Nacht war das Lösemittel verdampft und das Polymer hatte sich als ca. 10 µm dicker Film auf der Glasplatte abgelagert. Die Haftung dieses Polymerfilms auf dem Glas wurde durch folgende Experimente untersucht:
1. Über den Film wurde ein Streifen Tesa-Film® geklebt und der Klebestreifen ruckartig abgerissen. Dabei blieb der Polymerfilm komplett auf der Glasoberfläche haften.
2. Der Film wurde mittels eines scharfen Messers mehrfach kreuzweise geritzt. Auf den eingeritzten Film wurde ein Streifen Tesa-Film® geklebt und ruckartig abgerissen. Auch bei dieser Behandlung blieb der Film auf dem Substrat haften.
3. Die Glasplatte mit dem Polymerfilm wurde für 5 Minuten in Wasser eingetaucht. Anschließend ließ sich der Film leicht vom Glas ablösen.

### Vergleichsbeispiel F:

1 g des unmodifizierten Cycloolefincopolymeren aus Beispiel 8 (je 50 % Ethylen- und Norbornenrepetierinheiten) wurde in 10 ml Toluol gelöst und auf eine Glasoberfläche aufgerakelt. Nach Stehenlassen bei 20°C über Nacht war das Lösemittel verdampft und das Polymer hatte sich als ca. 10 µm dicker Film auf der Glasplatte abgelagert. Die Haftung dieses Polymerfilms auf dem Glas wurde durch folgende Experimente untersucht:
1. Über den Film wurde ein Streifen Tesa-Film® geklebt und der Klebestreifen ruckartig abgerissen. Dabei riß der Polymerfilm komplett von der Glasoberfläche ab.
2. Der Film wurde mittels eines scharfen Messers mehrfach kreuzweise geritzt. Auf den eingeritzten Film wurde ein Streifen Tesa-Film® geklebt und ruckartig abgerissen. Auch bei dieser Behandlung wurde der Cycloolefincopolymer-Film vollkommen vom Glas abgelöst.
3. Die Glasplatte mit dem Polymerfilm wurde in Wasser eingetaucht. Dabei löste sich der Film bereits beim Eintauchvorgang vom Glas ab.

## Patentansprüche

1. Verwendung eines Cycloolefinpolymers, enthaltend
A) 0,1 - 99,99 Gew.-%, bezogen auf die Gesamtmasse des Cycloolefincopolymers, polymerisierte Einheiten mindestens eines Cycloolefins,
B) 0 - 80 Cew.-%, bezogen auf die Gesamtmasse des Cycloolefincopolymers, polymerisierte Einheiten mindestens eines acyclischen Olefins und
C) 0,01 bis 50 % Gew., bezogen auf die Gesamtmasse des Cycloolefincopolymers, an peroxidischem Sauerstoff, der direkt an ein Kohlenstoffatom der polymerisierten Einheiten A) und/oder B) gebunden ist, wobei die polymerisierten Einheiten A) sich von mindestens einer Verbindung der Formeln I, II, III, IV, V, VI oder VII ableiten 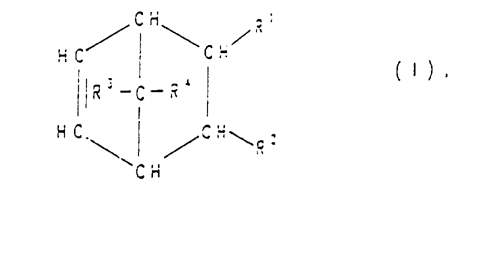 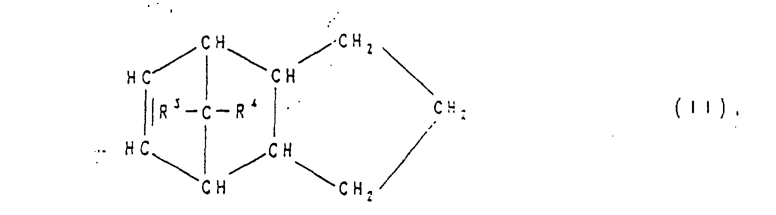 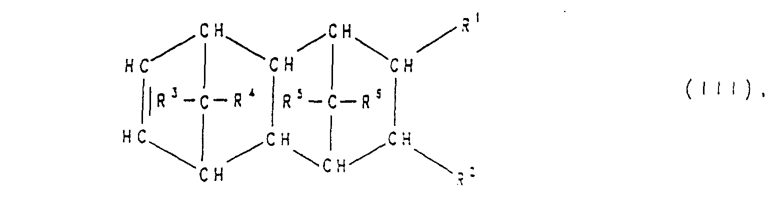 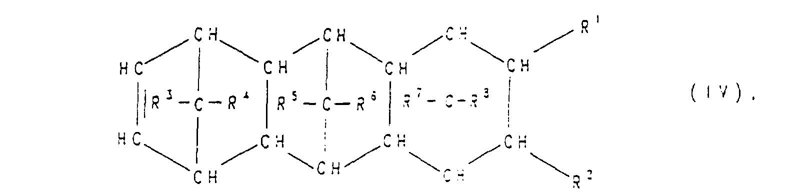 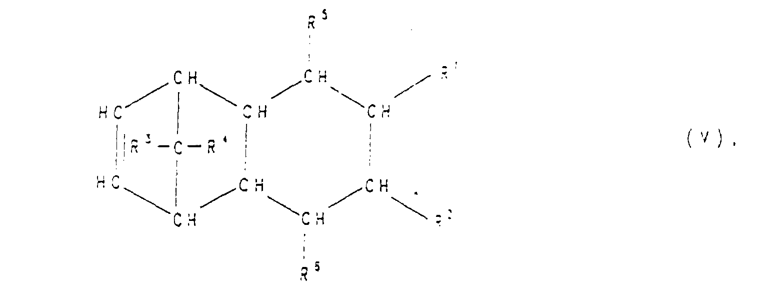 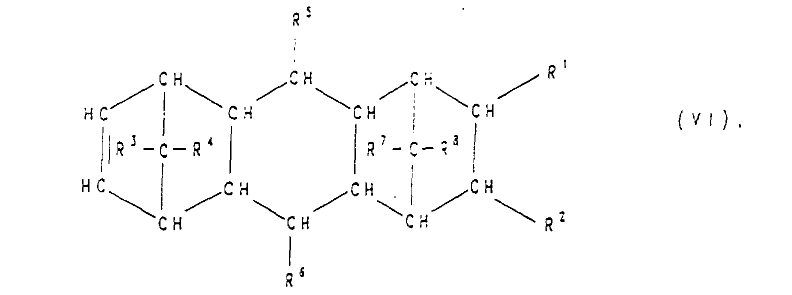 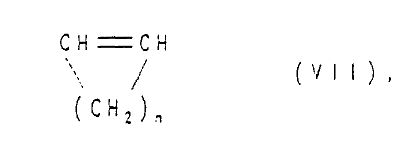 worin die Reste R¹, R², R³, R⁴, R⁵, R⁶, R⁷ und R⁸ gleich oder verschieden sind und ein Wasserstoffatom oder einen C₁-C₂₀-Kohlenwasserstoffrest bedeuten, oder einen Ring bilden, wobei gleiche Reste in den verschiedenen Formeln I-VI eine unterschiedliche Bedeutung haben können, und n eine Zahl von 2 bis 10 ist und die polymerisierten Einheiten B) sich von einem Alpha-Olefin mit 2 - 20 C-Atomen ableiten als Additive in Wachsen, Klebstoffen und Schmiermitteln, als Haftvermittler, Weichmacher, Dispergiermittel, Trägermaterial für Pigmente, Primer für Kunststoff-, Metall- und Glasbeschichtung und Haftgrund für Metallisierung von Kunststoffen.

2. Verwendung eines Cycloolefinpolymers gemäß Anspruch 1, wobei die polymerisierten Einheiten A) sich von Norbornen oder Tetracyclododecen ableiten, die durch (C₁-C₆)-Alkyl substituiert sein können.

3. Verwendung eines Cycloolefinpolymers gemäß Anspruch 1 oder 2, wobei die polymerisierten Einheiten B) sich von Ethylen oder Propylen ableiten.

4. Verwendung eines Cycloolefinpolymers gemäß einem oder mehreren der Ansprüche 1 bis 3, wobei der Sauerstoff als Peroxid und/oder als Hydroperoxid vorliegt.

## Claims

1. The use of a cycloolefin polymer comprising
A) 0.1-99.99% by weight, based on the total mass of the cycloolefin polymer, of polymerized units of at least one cycloolefin,
B) 0-80% by weight, based on the total mass of the cycloolefin polymer, of polymerized units of at least one acyclic olefin and
C) from 0.01 to 50% by weight, based on the total mass of the cycloolefin polymer, of peroxidic oxygen which is bonded directly to a carbon atom of the polymerized units A) and/or B), where the polymerized units A) are derived from at least one compound of the formulae I, II, III, IV, V, VI or VII 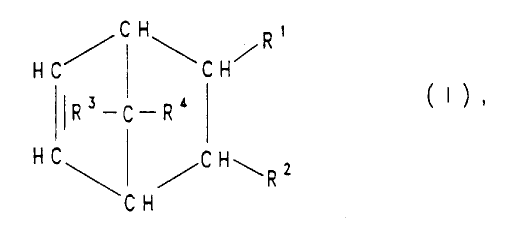 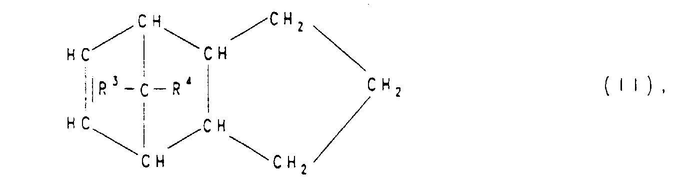 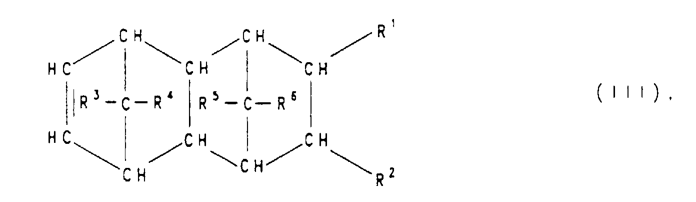 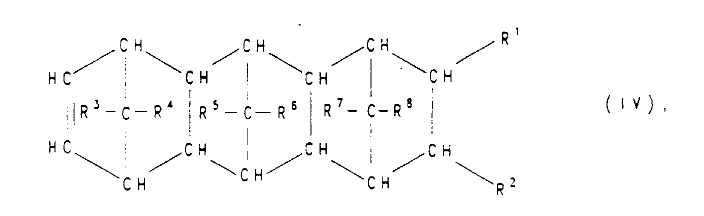 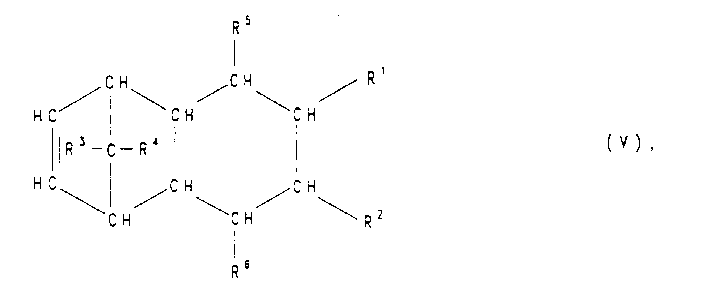 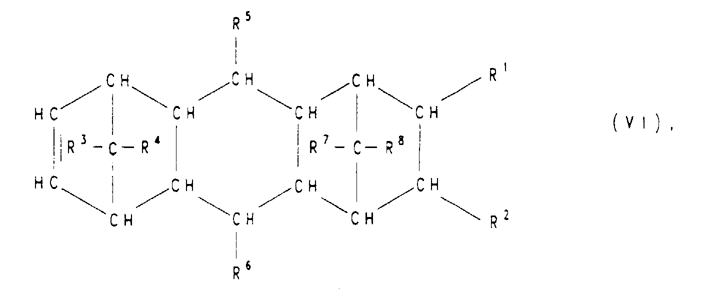 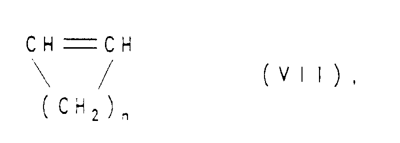 where the radicals R¹, R², R³, R⁴, R⁵, R⁶, R⁷ and R⁸ are identical or different and are a hydrogen atom or a C₁-C₂₀-hydrocarbon radical, or form a ring, where identical radicals in the various formulae I-VI can have different meanings, and n is a number from 2 to 10 and the polymerized units B) are derived from an alpha-olefin having 2-20 carbon atoms, as an aditive in waxes, adhesives and lubricants, as an adhesion promoter, plasticizer, dispersant, carrier material for pigments, primer for plastic, metal and glass coatings and adhesion base for metallization of plastics.

2. The use of a cycloolefin polymer as claimed in claim 1, wherein the polymerized units A) are derived from norbornene or tetracyclododecene, which can be substituted by (C₁-C₆)-alkyl.

3. The use of a cycloolefin polymer as claimed in claim 1 or 2, wherein the polymerized units B) are derived from ethylene or propylene.

4. The use of a cycloolefin polymer as claimed in one or more of claims 1 to 3, wherein the oxygen is present as peroxide and/or as hydroperoxide.

## Revendications

1. Utilisation d'un polymère de cyclo-oléfine, contenant
A) 0,1 à 99,99% en poids, sur la base de la masse totale du copolymère de cyclo-oléfine, d'unités polymérisées d'au moins une cyclo-oléfine;
B) 0 à 80% en poids, sur la base de la masse totale du copolymère de cyclo-oléfine, d'unités polymérisées d'au moins une oléfine acyclique, et
C) 0,01 à 50% en poids, sur la base de la masse totale du copolymère de cyclo-oléfine, d'oxygène peroxydique, qui est directement lié à un atome de carbone des unités polymérisées A) et/ou B),
les unités polymérisées A) dérivant d'au moins un composé de formules I, II, III, IV, V, VI ou VII : 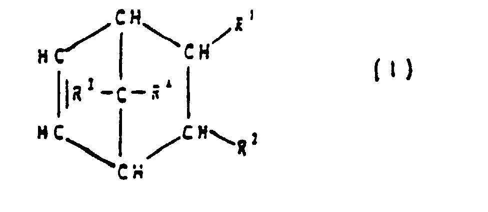 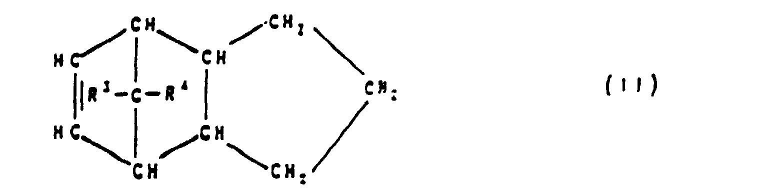 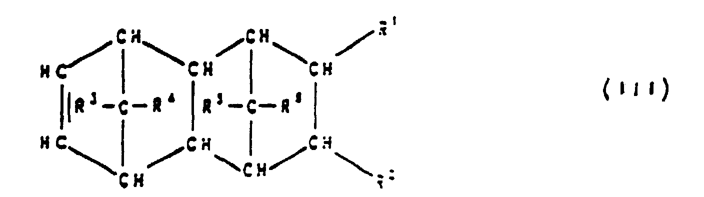 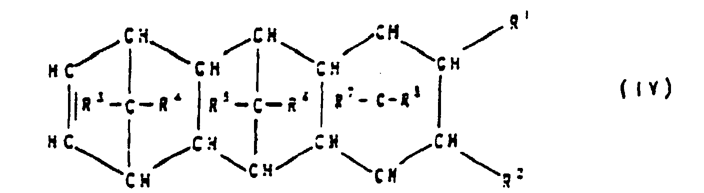 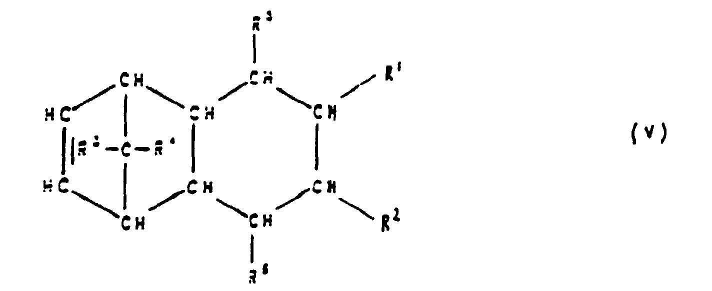 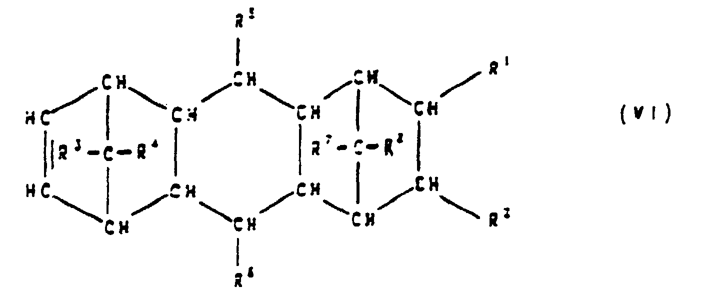 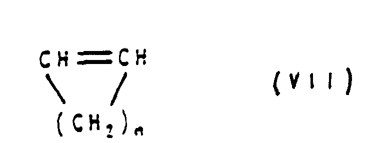 dans lesquelles les radicaux R¹, R², R³, R⁴, R⁵, R⁶, R⁷ et R⁸ sont identiques ou différents et signifient un atome d'hydrogène ou un radical hydrocarboné en C₁-C₂₀, ou forment un cycle, des radicaux identiques dans les différentes formules I à VI pouvant avoir une signification différente, et n est un nombre de 2 à 10, et les unités polymérisées B) dérivant d'une alpha-oléfine de 2 à 20 atomes de carbone, comme additifs dans des cires, dans des colles et dans des lubrifiants, comme agent adhésif, comme plastifiant, comme agent de dispersion, comme matériau de support pour pigments, comme couche de fond pour revêtement de plastique, de métal et de verre, et comme couche passivante pour la métallisation des plastiques.

2. Utilisation d'un polymère de cyclo-oléfine suivant la revendication 1, dans laquelle les unités polymérisées A) dérivent du norbornène ou du tétracyclododécène, qui peuvent être substitués par un alkyle en C₁-C₆.

3. Utilisation d'un polymère de cyclo-oléfine suivant la revendication 1 ou 2, dans laquelle les unités polymérisées B) dérivent de l'éthylène ou du propylène.

4. Utilisation d'un polymère de cyclo-oléfine suivant une ou plusieurs des revendications 1 à 3, dans laquelle l'oxygène se trouve sous forme de peroxyde et/ou d'hydroperoxyde.
